# EUROPÄISCHE PATENTSCHRIFT

(11) **EP 0 624 005 B1**
(45) Veröffentlichungstag und Bekanntmachung des Hinweises auf die Patenterteilung: **20.11.1996**
(21) Anmeldenummer: 94104946.2
(22) Anmeldetag: 29.03.1994
(51) Int. Cl.: H04B 3/56, H03H 7/07

(54) **Hochfrequenzsperrfilter für Niederspannungsnetze mit trägerfrequenter Nachrichtenübertragung**
High frequency blocking filter for low voltage main supply with carrier frequency information transmission
Filtre de blocage haute fréquence pour réseaux à basse tension avec transmission d'information par porteuse

(30) Priorität: 03.04.1993 DE 4311089
(43) Veröffentlichungstag der Anmeldung: 09.11.1994
(73) Patentinhaber: ABB PATENT GmbH, D-68309 Mannheim (DE)
(72) Erfinder: Zapp, Robert, D-58579 Schalksmühle (DE); Reitz, Thomas, D-58791 Werdohl (DE); Hoppe, Kurt, D-58339 Breckerfeld (DE); Stanski, Bernhard, D-45665 Recklinghausen (DE)
(74) Vertreter: Rupprecht, Klaus, Dipl.-Ing.

(56) Entgegenhaltungen:
- EP-B- 0 031 061
- FR-A- 2 563 391

## Beschreibung

Die Erfindung bezieht sich auf ein Hochfrequenzsperrfilter zur Anordnung in einem zur trägerfrequenten Nachrichtenübertragung genutzten Niederspannungsnetz.

Ein Sperrfilter für eine solche Anwendung ist aus der EP-B1-00 31 061 bekannt. Das dort beschriebene Filter weist in Längsrichtung einen Parallel-Resonanzkreis auf, an dem die Hochfrequenzspannung abfällt. Die gewünschte hohe Dämpfung des hochfrequenten Signals wird allerdings nur in einem sehr kleinen Frequenzbereich erzielt. Um eine hohe Dämpfung in einem anderen Bereich zu erzielen, müssen der Kondensator und die Induktivität des Parallel-Resonanzkreises neu aufeinander abgeglichen werden. Je nach zu sperrender Trägerfrequenz müssen unterschiedlich bestückte Geräte eingesetzt werden.

Im praktischen Einsatz ist auch störend, daß der Schwingkreis durch externe Blindwiderstände, wie z.B. Transformatorspulen beeinflußt wird und daß er von der Abschlußimpedanz abhängig ist. Diese Eigenschaften bewirken, daß bei sich ändernden Netzverhältnissen keine optimale Dämpfung der Trägerfrequenz gegeben ist. Außerdem ist die bekannte Sperre nicht symmetrisch, wodurch in manchen Anwendungsfällen zwei Sperren gegeneinander geschaltet werden müssen.

Der Erfindung liegt die Aufgabe zugrunde, ein Hochfrequenzsperrfilter anzugeben, das einfach abzugleichen ist und weitgehend unabhängig ist von den jeweiligen Netzverhältnissen.

Diese Aufgabe wird gemäß Patentanspruch 1 gelöst durch ein Hochfrequenzsperrfilter zur Anordnung in einem zur trägerfrequenten Nachrichtenübertragung genutzten Niederspannungsnetz, wobei das Filter als Breitbandsperre mit nachstehender überbrückter Dreifach-Ketten-Struktur aufgebaut ist:
a) zwischen einem ersten Filtereingang und einem ersten Filterausgang ist eine Längsspule angeordnet, die mit einer Serienschaltung dreier Widerstände überbrückt ist,
b) am Verbindungspunkt zwischen erstem Widerstand und zweitem Widerstand ist eine erste Ableitspule angeschlossen und am Verbindungspunkt zwischen dem zweiten Widerstand und dem dritten Widerstand ist eine zweite Ableitspule angeschlossen,
c) die Ausgänge der beiden Ableitspulen sind miteinander und mit dem Eingang eines Ableitkondensators verbunden, dessen Ausgang mit der Basisleitung zwischen dem zweiten Eingang und zweiten Ausgang des Filters verbunden ist.

Vorteilhafte Ausgestaltungen sind in weiteren Ansprüchen angegeben und der unten stehenden Beschreibung eines Ausführungsbeispiels zu entnehmen.

Das vorgeschlagene Sperrfilter hat eine Reihe von Vorteilen. Es ist symmetrisch bezüglich der Filterstruktur und bei geeigneter Dimensionierung der Komponenten auch bezüglich des Übertragungsverhaltens. Es ist eine Bandfiltercharakteristik gegeben. Die Bandmittenfrequenz und die Bandbreite sind einfach mit Hilfe von Widerständen einstellbar. Die Bandmittenfrequenz ist praktisch unabhängig von der Abschlußimpedanz. Bei Bandmittenfrequenz ist Hochohmigkeit zwischen Eingangs- und Ausgangsklemmen gegeben. Das Sperrfilter läßt sich auch als Entstörfilter einsetzen.

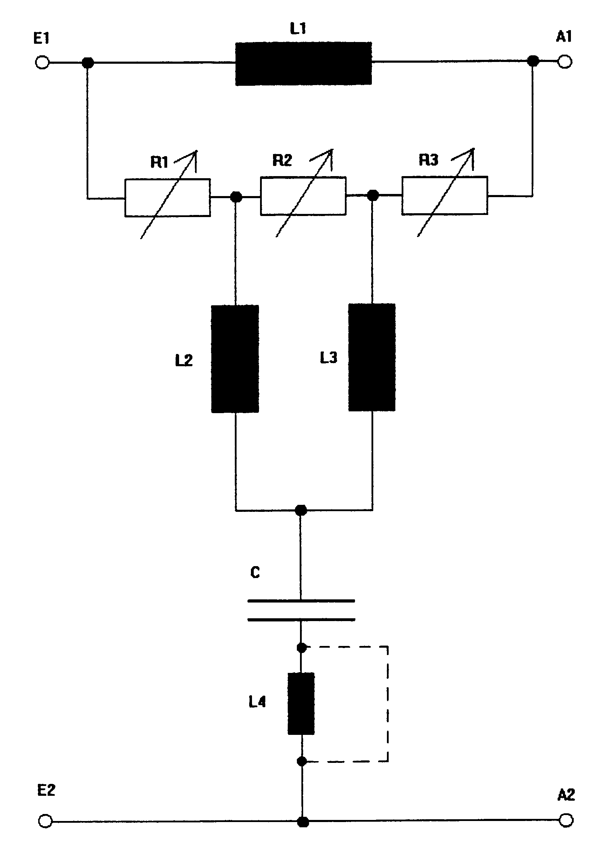

Die Erfindung wird nachstehend anhand eines in der Zeichnung dargestellten Ausführungsbeispiels näher erläutert.

Die dargestellte Filterstruktur ist ein Vierpol mit den Eingangsklemmen E1, E2 und Ausgangsklemmen A1, A2. Die zweite Eingangsklemme E2 und die zweite Ausgangsklemme A2 sind über eine Basisleitung miteinander und üblicherweise mit dem N-Leiter eines Niederspannungsnetzes verbunden. Ein L-Leiter des Netzes kann am ersten Eingang E1 und die Lastseite am ersten Ausgang A1 angeschlossen werden. Zwischen dem ersten Eingang E1 und dem ersten Ausgang A1 ist eine Längsspule L1 geschaltet. Die Längsspule L1 ist überbrückt durch drei einstellbare Widerstände R1 bis R3. An den Verbindungspunkt zwischen erstem Widerstand R1 und zweitem Widerstand R2 ist eine erste Ableitspule L2 angeschlossen. Am Verbindungspunkt zwischen dem zweiten Widerstand R2 und dem dritten Widerstand R3 ist eine zweite Ableitspule L3 angeschlossen. Die Ausgänge der Ableitspulen L2, L3 sind miteinander und mit einem Kondensator C verbunden, dessen zweiter Anschluß mit der Basisleitung verbunden ist.

Die dargestellte Filterstruktur ist geeignet um die für die vorgesehene Anwendung typischen Lastströme bis 63 Ampere bei 50 Hz mit sehr geringer Dämpfung zu führen. Die Filterwirkung ist auch bei Umkehrung des Laststromes gegeben. Der Schaltungsaufwand ist gering, da nur wenige einfache Bauelemente benötigt werden.

Die Dimensionierung der Filterkomponenten kann nach bekannten Berechnungsmethoden erfolgen und den jeweiligen Verhältnissen angepaßt werden.

Theoretische Untersuchungen und praktische Versuche ergaben als geeignete Filterdimensionierung nachstehende beispielhaft genannte Dimensionierung. Dabei wurde eine Netzfrequenz von 50 Hz und eine Trägerfrequenz von 120 kHz ± 10 kHz bis 20 kHz zugrundegelegt. Als Netzimpedanz wurden 50 Ohm bei 50 Hz und 33 Ohm bei 120 kHz zugrundegelegt. Um eine gewünschte Filterwirkung zu erzielen, soll der resultierende Gesamtwiderstand des Filters bei 120 kHz über 33 Ohm liegen, bevorzugt bei etwa 60 Ohm. Dies wird erreicht mit nachstehender Dimensionierung der einzelnen Komponenten:
L1 = 480 µH
L2 = L3 = 40 µH
R1 = R2 = R3 = 52 Ohm
C = 0,22 µF, 250 Volt

Um völlige Symmetrie des Übertragungsverhaltens zu erzielen, muß die Induktivität der Spule L1 zwölfmal so hoch wie die Induktivität der Spule L2 bzw. L3 sein; die Induktivität der Spulen L2 und L3 muß gleich hoch sein; außerdem müssen die Widerstände R1, R2 und R3 gleich groß sein. Es ist zweckmäßig, die Widerstände Rl bis R3 im Bereich von etwa 30 bis 60 Ohm einstellbar zu wählen. Durch symmetrisches Verstellen der Widerstände R1 bis R3 kann die Bandmittenfrequenz eingestellt werden. Der Einfluß des zweiten Widerstandes R2 ist deutlich größer als der Einfluß der beiden anderen Widerstände R1 und R3. Deshalb kann zur Vereinfachung auch nur der zweite Widerstand einstellbar ausgeführt werden.

Am Kondensator C fällt die Netzspannung ab. Seine Dimensionierung ist unkritisch. Setzt man anstelle des Kondensators C einen Saugkreis, bestehend aus einer Reihenschaltung eines Kondensators C und einer Spule L4 ein, so kann eine Verringerung der Verlustleistung des Filters und eine um etwa 3 bis 4 dB erhöhte Dämpfung im Sperrbereich erzielt werden. Nachteilig ist allerdings der erhöhte Aufwand für die zusätzlich erforderlich Spule L4 und daß die Bandbreite des Durchlaßbereiches etwas eingeschränkt wird.

Es wurde auch untersucht, ob ein Vierfach-Filter deutliche Vorteile gegenüber einem Dreifach-Filter bringen würde. Dies ist gemessen am Mehraufwand nicht der Fall.

## Patentansprüche

1. Hochfrequenzsperrfilter zur Anordnung in einem zur trägerfrequenten Nachrichtenübertragung genutzten Niederspannungsnetz, dadurch gekennzeichnet, daß das Filter als Breitbandsperre mit nachstehender überbrückter Dreifach-Ketten-Struktur aufgebaut ist:
a) zwischen einem ersten Filtereingang (E1) und einem ersten Filterausgang (A1) ist eine Längsspule (L1) angeordnet, die mit einer Serienschaltung dreier Widerstände (R1,R2,R3) überbrückt ist,
b) am Verbindungspunkt zwischen erstem Widerstand (R1) und zweitem Widerstand (R2) ist eine erste Ableitspule (L2) angeschlossen und am Verbindungspunkt zwischen dem zweiten Widerstand (R2) und dem dritten Widerstand (R3) ist eine zweite Ableitspule (L3) angeschlossen,
c) die Ausgänge der beiden Ableitspulen (L2,L3) sind miteinander und mit dem Eingang eines Ableitkondensators (C) verbunden, dessen Ausgang mit der Basisleitung zwischen dem zweiten Eingang (E2) und zweiten Ausgang (A2) des Filters verbunden ist.

2. Hochfrequenzsperrfilter nach Anspruch 1, dadurch gekennzeichnet, daß wenigstens einer der Widerstände (R1 bis R3) einstellbar ausgeführt ist.

3. Hochfrequenzsperrfilter nach Anspruch 2, dadurch gekennzeichnet, daß allein der zweite Widerstand (R2) einstellbar ausgeführt ist.

4. Hochfrequenzsperrfilter nach einem der vorstehenden Ansprüche, dadurch gekennzeichnet, daß die Induktivität der beiden Ableitspulen (L2,L3) gleich hoch ist und daß die Induktivität der Längsspule (L1) zwölfmal so groß ist wie die Induktivität einer der Ableitspulen (L2 bzw. L3).

5. Hochfrequenzsperrfilter nach einem der vorstehenden Ansprüche, dadurch abgewandelt, daß anstelle nur eines Ableitkondensators (C) ein Saugkreis eingesetzt ist, der aus einer Serienschaltung eines Kondensators (C) und einer Saugkreisspule (L4) besteht.

## Claims

1. High-frequency rejection filter for arrangement in a low-voltage power supply which is used for carrier-frequency message transmission, characterized in that the filter is constructed as a broadband filter with downstream bridged triple chain structure:
a) a longitudinal coil (L1) is arranged between a first filter input (E1) and a first filter output (A1) and is bridged by a series circuit formed by three resistors (R1, R2, R3),
b) a first bypass coil (L2) is connected to the junction point between the first resistor (R1) and the second resistor (R2), and a second bypass coil (L3) is connected to the junction point between the second resistor (R2) and the third resistor (R3),
c) the outputs of the two bypass coils (L2, L3) are connected to one another and to the input of a bypass capacitor (C), the output of which is connected to the base line between the second input (E2) and the second output (A2) of the filter.

2. High-frequency rejection filter according to Claim 1, characterized in that at least one of the resistors (R1 to R3) is designed to be variable.

3. High-frequency rejection filter according to Claim 2, characterized in that solely the second resistor (R2) is designed to be variable.

4. High-frequency rejection filter according to one of the preceding claims, characterized in that the inductance of the two bypass coils (L2, L3) is identical and in that the inductance of the longitudinal coil (L1) is twelve times as large as the inductance of one of the bypass coils (L2 or L3).

5. High-frequency rejection filter according to one of the preceding claims, modified in that a series resonant circuit is employed instead of just a bypass capacitor (C), which series resonant circuit comprises a series circuit formed by a capacitor (C) and a series resonant coil (L4).

## Revendications

1. Filtre de blocage haute fréquence à disposer dans un réseau à basse tension utilisé pour la transmission d'information par fréquence porteuse, caractérisé en ce que le filtre est construit comme un blocage à large bande suivi par une triple structure en chaîne court-circuitée:
a) une bobine (L1) longitudinale, qui est court-circuitée par un montage en série de trois résistances (R1, R2, R3), est disposée entre une première entrée (E1) du filtre et une première sortie (A1) du filtre,
b) une première bobine (L2) de dérivation est raccordée au point de connexion entre la première résistance (R1) et la deuxième résistance (R2) et une deuxième bobine (L3) de dérivation est raccordée au point de connexion entre la deuxième résistance (R2) et la troisième résistance (R3),
c) les sorties des deux bobines (L2, L3) de dérivation sont reliées l'une avec l'autre et avec l'entrée d'un condensateur (C) de dérivation dont la sortie est reliée avec la ligne électrique de base entre la deuxième entrée (E2) et la deuxième sortie (A2) du filtre.

2. Filtre de blocage haute fréquence selon la revendication 1, caractérisé en ce qu'au moins une des résistances (R1 à R3) est réalisée de manière à pouvoir être ajustée.

3. Filtre de blocage haute fréquence selon la revendication 1, caractérisé en ce que seule la deuxième résistance (R2) est réalisée de manière à pouvoir être ajustée.

4. Filtre de blocage haute fréquence selon une des revendications précédentes, caractérisé en ce que l'inductivité des deux bobines (L2, L3) de dérivation est la même et que l'inductivité de la bobine (L1) longitudinale est douze fois plus grande que l'inductivité d'une des bobines (L2 ou L3) de dérivation.

5. Filtre de blocage haute fréquence selon une des revendications précédentes, modifié en ce qu'un circuit d'absorption, qui est composé d'un montage en série d'un condensateur (C) et d'une bobine (L4) de circuit d'absorption, est mis à la place d'un seul condensateur (C) de dérivation.
